# EUROPEAN PATENT APPLICATION

(11) **EP 4 023 502 A1**
(43) Date of publication of application: **06.07.2022**
(21) Application number: 19938403.3
(22) Date of filing: 30.10.2019
(51) Int. Cl.: B60R 21/015

(54) **VEHICLE-MOUNTED SAFETY PROMPT SYSTEM AND METHOD**

(30) Priority: 19.07.2019 CN 201910657462
(71) Applicant: Steelmate Co., Ltd., Zhongshan, Guangdong 528425 (CN)
(72) Inventor: LI, Anpei, Zhongshan, Guangdong 528425 (CN); TU, Daoming, Zhongshan, Guangdong 528425 (CN); LIANG, Jiawen, Zhongshan, Guangdong 528425 (CN); WEN, Ao, Zhongshan, Guangdong 528425 (CN); CHEN, Junjin, Zhongshan, Guangdong 528425 (CN); TIAN, Yong, Zhongshan, Guangdong 528425 (CN); ZHAO, Yongjian, Zhongshan, Guangdong 528425 (CN)
(74) Representative: Fry, David John
(86) International application number: PCT/CN2019/114442
(87) International publication number: WO 2021/012444

(57) **Abstract**

An in-vehicle safety alert system includes a pressure sensing device and a detection host. The pressure sensing device includes a first control module and a pressure sensing module; the pressure sensing module is configured to sense a seat cushion pressure of the seat and send a pressure contact signal and a pressure release signal to the first control module; the detection host includes an enclosure and a second control module, a buckle sensing module, an indicator module, and a power module; the buckle sensing module is configured to send an engagement signal or a disengagement signal to the second control module; and the second control module is configured to prompt the indicator module to issue a first indication signal, when the second control module receives an disengagement signal and does not receive a pressure release signal within a preset time.

## Description

### TECHNICAL FIELD

The present invention relates to the in-vehicle safety technology, and particularly relates to an in-vehicle safety alert system and method.

### BACKGROUND

With much more attention being paid to the in-car children safety, a child safety seat is increasingly used in the automotive field. A prior art safety seat pays more attention to the child safety protection during travelling of a vehicle, for example, enhancing the protection of the child in the event of a vehicle collision, and using a sensing device provided on the safety seat to determine whether the child is sitting well. But when the driver leaves the vehicle, it is easy to leave the child inside the vehicle inadvertently, causing safety dangers.

### SUMMARY OF THE INVENTION

The present invention provides an in-vehicle safety alert system.

The present invention also provides an in-vehicle safety alert method.

In order to achieve the above objects, the present invention provides the following solution.

An in-vehicle safety alert system, includes:
a pressure sensing device; and a detection host; the pressure sensing device is adapted to be mounted on a seat cushion of a seat, and includes a first control module and a pressure sensing module; the pressure sensing module is configured to sense a seat cushion pressure of the seat and send a pressure contact signal and a pressure release signal to the first control module, and the pressure contact signal and the pressure release signal represent pressure contact and pressure release, respectively;
the detection host is adapted to be mounted on a buckle of a seat belt of a driver's seat; the detection host includes an enclosure and a second control module, a buckle sensing module, an indicator module, and a power module for supplying power to the detection host; the buckle sensing module is configured to sense a connection state between a tongue of the seat belt and the buckle and send an engagement signal or a disengagement signal to the second control module; the engagement signal and disengagement signal respectively represent engagement and disengagement between the tongue and the buckle of the seat belt; the second control module is in communication with the first control module; and the second control module is configured to prompt the indicator module to issue a first indication signal, when the second control module receives an disengagement signal and does not receive a pressure release signal within a preset time.

Compared with the prior art, the solution of the invention has the following advantages.

In the in-vehicle safety alert system of the present invention, the detection host and the pressure sensing device are respectively mounted on the driver's seat with a seat belt and the child seat. When the driver unfastens the seat belt, the buckle sensing module senses that the tongue of the seat belt is detached from the buckle. The buckle sensing module sends a disengagement signal to the second control module. If the child does not leave the pressure sensing device at this time, and the second control module does not receive the pressure release signal, the second control module prompts the indicator module to issue a first indication signal to warn the driver that the child has not left the seat, thereby preventing the child from being left in the vehicle.

The additional aspects and advantages of the invention will be set forth in part in the description which follows.

### BRIEF DESCRIPTION OF DRAWINGS

The above and/or additional aspects and advantages of the present invention will become apparent and readily understood from various embodiments of the invention in conjunction with accompanied drawings, wherein:
FIG. 1 is a schematic block diagram of an embodiment of the present invention;
FIG. 2 is an exploded perspective view of a detection host of an embodiment of the present invention;
FIG. 3 is a schematic diagram of installation of a detection host of an embodiment of the present invention;
FIG. 4 is a schematic structural view of a pressure sensing device according to an embodiment of the present invention; and
FIG. 5 is a schematic diagram of an application process of a detection host and a pressure sensing device according to an embodiment of the present invention.

### DETAILED DESCRIPTION OF THE EMBODIMENTS

The embodiments of the present invention are described in detail below, and the examples of the embodiments are illustrated in the drawings, wherein the same or similar reference numerals are used to refer to the same or similar elements or elements having the same or similar functions. The embodiments described below with reference to the drawings are intended to be illustrative of the invention and are not to be construed as limiting.

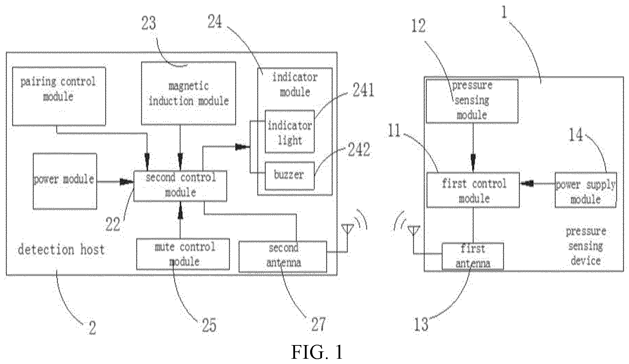

As shown in FIG. 1, the present invention provides an in-vehicle safety alert system. It comprises a pressure sensing device 1 and a detection host 2. The pressure sensing device 1 is adapted to be mounted on a child seat, such as a child safety seat, and is integral with the safety seat. It can also be mounted separately on a vehicle seat to sense a child. The detection host 2 is adapted to be mounted on the buckle 3 of the driver's seat belt to sense the engagement of the tongue 4 of the seat belt of the driver's seat with the buckle 3.

The pressure sensing device 1 includes a first control module 11, a pressure sensing module 12, and a power supply module 14 that supplies power to the pressure sensing device 1. The pressure sensing module 12 is configured to sense a pressure state and send a pressure contact signal and a pressure release signal respectively corresponding to the pressed and un-pressed states to the first control module 11.

The detection host 2 includes a enclosure 21, a second control module 22 housed in the enclosure 21, a buckle sensing module 23, an indicator module 24, and a power module for supplying power to the detection host 2. In the embodiment, the indicator module 24 includes a sound generator and an indicator light 241, and the sound generator specifically includes a buzzer 242. In other embodiments, the indicator module 24 may also include a display screen that appears as visible elements such as text, graphics, and the like.

The buckle sensing module 23 is configured to sense a connection state between the tongue 4 of the seat belt and the buckle 3 and transmit an engagement state signal indicating the engaged state to the second control module 22. The connection state signal includes an engagement signal or a disengagement signal when the tongue 4 of the seat belt is engaged or disengaged from the buckle 3. The second control module 22 is communicatively connected to the first control module 11. The second control module 22 is configured to prompt the indicator module 24 to issue a first indication signal when the second control module 22 receives the disengagement signal and does not receive the pressure release signal within a preset time. Preferably, the preset time is 0 second. In other embodiments, the preset time may also be modified according to actual needs. In this embodiment, the first indication signal is a continuous 20s sound generated by the buzzer 242, and the indicator light 241 emits a flashing red light. The specific prompt duration and form of the buzzer 242 and the indicator light 241 can be changed according to actual conditions.

The detection host 2 and the pressure sensing device 1 are mounted respectively on the driver's seat with a seat belt and the child seat. When the driver unfastens the seat belt, the buckle sensing module 23 senses that the tongue 4 of the seat belt is disengaged from the buckle 3, and the buckle sensing module 23 sends a disengagement signal to the second control module 22. If the child does not leave the pressure sensing device 1 at this time, and the second control module 22 does not receive the pressure release signal, the second control module 22 prompts the indicator module 24 to issue a first indication signal to prompt the driver that the child has not left the seat. Thereby, the effect of preventing children from being left in the vehicle is achieved. Since to fasten the driver to the seat belt is one of the driving rules necessary for safe driving, the driver's release of the seat belt before leaving the vehicle can be deemed a trigger condition. When the child does not leave the seat, a warning signal is issued to prevent the child from remaining in the vehicle. This technology can ensure that the child will not be forgotten in the vehicle under the conditions of the driver's compliance with the driving rules, so it can greatly protect child. For the driver, in order to prevent the child from leaving the vehicle when leaving the vehicle, it is necessary to develop good driving habits. This can provide better supervision for the driver and further ensure the safety of the driver and the child.

Further, the detection host 2 includes a second wireless communication module housed in the enclosure 21 and electrically connected to the second control module 22. The pressure sensing device 1 includes a first wireless communication module electrically connected to the first control module 11. The first control module 11 and the second control module 22 communicate through a wireless communication module. Specifically, the first wireless communication module and the second wireless communication module are a first antenna 13 and a second antenna 27, respectively. Preferably, the first antenna 13 is a transmitting antenna, and the second antenna is a receiving antenna. That is, a one-way communication connection between the pressure sensing device 1 and the detection host 2 can reduce power consumption. In other embodiments, the detection host 2 and the pressure sensing device 1 can be directly and electrically connected by a wire.

In this embodiment, the power supply module 14 is a non-replaceable first button battery, and the power module is a replaceable second button battery 26.

The detection host 2 includes a mute control module 25, and the mute control module 25 is electrically connected to the second control module 22, and is configured to send a mute request signal or sound generating request signal to the second control module 22. The second control module 22 responds to the mute request signal or the sound generating request signal, and issues a control command to prompt the sound generator to enter a mute state or a sound generating state.

The mute control module 25 can send a mute request signal or a sound generating request signal to the second control module 22 to enable the sound generator to enter a mute state or a sound generating state, thereby providing a more flexible choice for the user, and preventing the sound from causing trouble to the user.

In the present embodiment, when the second control module 22 receives the engagement signal, the second control module 22 sends a control command to the sound generator to enter the sound generating state. When the tongue 4 of the seat belt is connected to the buckle 3, the buzzer 242 enters the sound generating state by default so that the indicator module 24 will play an indicating role when the driver leaves the seat, thus avoiding leaving the child in the vehicle.

The first control module 11 is configured to enter a wake state or a sleep state when the first control module 11 receives the pressure contact signal or the pressure release signal, correspondingly prompting the first wireless communication module to enter a working state or an idle state. The first control module 11 includes a first delay unit for delaying entrance of the first control module into a sleep state when the first control module 11 receives the pressure release signal.

When the pressure sensing module 12 is pressed, the first control module 11 wakes up, causing the first wireless communication module to enter a signal transmitting state. When the pressure sensing module 12 is not pressed, sufficient time is provided for the first wireless communication module to send a pressure release signal due to the delay of the first delay unit. After the transmission is completed, the first control module 11 enters a sleep state, and the first wireless communication module enters a shutdown state, and it no longer transmits signals, thereby reducing the power consumption of the pressure sensing device 1 and improving its endurance capability.

Further, the first control module 11 includes a first control unit and a first timing unit electrically connected to each other. The first timing unit is configured to respectively enter a wake state or a sleep state when the pressure sensing module 12 is pressed or released. The first control unit is configured to periodically wake up the first wireless communication module according to a preset time of the first timing unit and prompt the first wireless communication module to enter a working state.

The first timing unit plays a timing function, and when the pressure sensing module 12 is in the pressure contact state, the first timing unit enters the working state. When the pressure sensing module 12 is in the pressure release state, the first timing module enters a sleep state. The first control unit can periodically wake up the first wireless communication module according to the preset time by the first timing unit, thereby reducing the working time of the first wireless communication module, and further improving the endurance capability of the pressure sensing device 1.

In this embodiment, the wake-up time of the first wireless communication module is 10 minutes, and the specific time may be set according to actual needs. The wake-up time may also be in a non-periodic form, such as waking up the first wireless communication module 2 seconds after the pressure sensing module 12 is pressed and after 5 minutes, and then entering the periodic wake-up mode for 10 minutes.

Similarly, the second control module 22 is configured to enter a wake state or a sleep state correspondingly when the second control module 22 receives the engagement signal or the disengagement signal, to correspondingly drive the second wireless communication module and the indicator module to enter the working state or idle state. The second control module 22 further includes a second delay unit for delaying the second control module 22 into a sleep state when the tongue 4 of the seat belt is disengaged from the buckle 3.

Further, the second control module 22 includes a second control unit and a second timing unit that are electrically connected to each other. The second timing unit is configured to respectively enter a wake state or a sleep state when the tongue 4 of the seat belt is engaged or disengaged from the buckle 3. The second control module 22 is configured to periodically enter a wake state according to a preset time of the second timing unit to prompt the second wireless communication module and the indicator module to enter a working state.

The detection host 2 can realize wake-up and sleep function according to the connection condition of the seat belt. When the seat belt is engaged, the second control unit can periodically wake up under the action of the second timing unit, so that the indicator module 24 and the second wireless communication module enter a working state, thereby reducing power consumption and improving endurance of the detection host, similar to the pressure sensing device 1.

Specifically, in present embodiment, when the tongue 4 of the seat belt and the buckle 3 are engaged, the wake-up period of the detection host 2 is 800ms, wherein the wake-up duration is 10ms and the sleep duration is 790ms. Correspondingly, the pressure contact signal or the pressure release signal emitted by the pressure sensing device 1 has duration of Is. When the pressure sensing device 1 emits a pressure contact signal or a pressure release signal, the signal can be received by the second wireless communication module of the detection host 2. In other embodiments, the duration of the wake-up period of the detection host 2 and the duration of the signal sent by the pressure sensing device 1 may be adjusted according to actual condition.

Further, the detection host 2 further includes a pairing control module which is electrically connected to the second control module 22, and is configured to send a pairing request signal to the second control module 22. The second control module 22 processes, matches, and stores a communication signal received by the second wireless communication module in response to the pairing request signal.

The user can send a pairing request signal to the second control module 22 through the pairing control module. The second control module 22 then wakes up the second wireless communication module to enter the signal receiving state. The user presses the pressure sensing device 1 to be matched, the pressure sensing device 1 sends a pressure contact signal, and the second control module 22 receives the pressure contact signal through the second wireless communication module, and stores it after processing and matching. This arrangement can prevent the detection host 2 from being affected by the signal from the unmatched pressure sensing device 1 during the reception of the signal, which results in a false alarm.

It is preferable that when the second control module 22 receives the pairing request signal, the second control module 22 automatically clears the pre-stored matching information. With such an arrangement, each time the user detects the matching state between the detection host 2 and the pressure sensing device 1, the detection host 2 can automatically clear the previous matching information and store new matching information. Further, the detection host 2 can simultaneously match a plurality of pressure sensing devices 1.

Preferably, when the second control module 22 determines that the wake-up duration of the second wireless communication module is greater than a preset duration, and the second control module 22 does not receive the pressure contact signal or the engagement signal, the second control module 22 sends a sleep control command to the second wireless communication module to make the second wireless communication module enter a sleep state. When the detection host enters a matching state through the pairing control module by the user, but the pressure contact signal cannot be received within a certain time, the detection host 2 enters a sleep state, thereby reducing power consumption.

Further, the first control module 11 includes a first power detection unit which is configured to detect power information of the pressure sensing device 1. The first control unit is configured to send the power information detected by the first power detection unit to the second control module 22. The second control module 22 is configured to prompt the indicator module 24 to send a second indication signal when the power of the pressure sensing device 1 is lower than a preset value.

Similarly, the second control module 22 includes a second power detection unit which is configured to detect the power information of the detection host 2 and send it to the second control unit. The second control unit is configured to prompt the indicator module 24 to issue a third indication signal when the power of the detection host 2 is lower than a preset value.

When the power of the detection host 2 and the pressure sensing device 1 is too low, the second control module 22 sends a control command to the indicator module 24 to prompt the second or third indication signals to prompt the user to make a respond in time.

Further, the second control module 22 is configured to, in response to the pressure contact signal, drive the indicator module 24 to issue a fourth indication signal, and is further configured to prompt the indicator module 24 to issue a fifth indication signal in response to the pressure release signal.

Specifically, in the embodiment, when the tongue 4 of the seat belt and the buckle 3 are in the disengaged state, the second wireless communication module is in an idle state. At this time, the detection host 2 cannot receive the signal from the pressure sensing device 1. When the tongue 4 of the seat belt is engaged with the buckle 3, the first control module 11 sends a pressure contact signal or a pressure release signal to the second control module 22, when the pressure sensing module 12 is pressed or released. The second control module 22 prompts the indicator module 24 to emit a corresponding fourth or fifth indication signal in response to the pressure contact signal or the pressure release signal. When the child sits on the seat or leaves the seat, the detection host 2 can issue a fourth or fifth indication signal to notify the driver of the child's riding state to better pay attention to the child safety and reduce the child's security risk during travelling of a vehicle.

Preferably, the first control module is configured to determine whether duration of the pressure contact signal or the pressure release signal is greater than a preset duration, and when the duration is greater than the preset duration, the pressure contact signal or the pressure release signal is sent to the second control module 22. In this embodiment, the preset duration is set to two seconds, and the specific duration can be modified as needed.

With such an arrangement, the pressure sensing device 1 transmits the pressure contact signal or the pressure release signal to the detection host only after receiving the pressure contact signal or the pressure release signal for a specified length of time. When the vehicle shakes during the running, it can prevent the child from passively leaving the seat cushion in a short time, thereby causing false alarm of the detection host. Specifically, when the pressure sensing module 12 is pressed for less than two seconds, or when it is not pressed for more than two seconds, the detection host 2 does not issue an alarm.

In this embodiment, the buckle sensing module 23 specifically includes a magnetic induction module. The magnetic induction module includes a reed switch 231 and a magnet 232. The magnet 232 is used to magnetize the tongue 4 of the seat belt to close the reed switch 231 when the tongue 4 of the seat belt is inserted into the buckle 3. In the present embodiment, the magnet 232 is also used to micro-conduct the reed switch 231. Since the conduction of the reed switch 231 depends on the strength of the surrounding magnetic field, that is, it is necessary to have a sufficiently strong magnetic field to turn on the reed switch 231. Obviously, the distance between the reed switch 231 and the magnetic field affects the conduction effect of the reed switch 231. By setting a gap between the magnet 232 and the reed switch 231, the strength of the magnetic field formed by the magnet 232 causes the reed switch 231 to be slightly conducted, but not fully conducted. When the tongue 4 is inserted into the buckle 3, that is, when the tongue 4 is close to the magnet 232, the magnet 232 magnetizes the tongue 4. The magnetic field generated by the tongue 4 and the magnetic field generated by the magnet 232 are added to realize the closing of the reed switch 231, thereby turning on a corresponding circuit, so that it can be detected whether the tongue 4 of the seat belt is inserted into the buckle 3 of the seat belt.

In other embodiments, the buckle sensing module 23 may further include an infrared sensing module, a Hall switch, or a capacitive proximity switch. It is also possible to sense the engagement state of the two by determining the pressure when the tongue 4 of the seat belt is inserted into the buckle 3. The working principle of the infrared sensing module described above is as follows: an infrared sensing probe emits infrared rays which pass through a path through which the tongue 4 of the seat belt is inserted into the buckle 3. When the tongue 4 of the seat belt is connected to the buckle 3, the infrared rays are blocked, thereby judging that the tongue 4 of the seat belt and the buckle 3 are in a snap-fit state. On the other hand, when the infrared rays are not blocked, it is judged that the tongue 4 of the seat belt and the buckle 3 are in a disengaged state. The above-mentioned Hall switch works on the principle that a magnet is mounted on the tongue 4 of the seat belt, and the Hall switch is mounted on the buckle 3. When the tongue 4 of the seat belt is engaged or disengaged from the buckle 3, a level change occurs after the Hall switch detects the magnetic field, thereby judging whether the tongue 4 of the seat belt and the buckle 3 are engaged. The working principle of the above capacitive proximity switch is specifically as follows: when the tongue 4 of the seat belt approaches or moves away from the capacitive proximity switch, the dielectric constant of a capacitor changes, and in turn, the capacitance changes, and the circuit state of the detection host 2 is also changed, thereby determining whether the tongue 4 of the seat belt and the buckle 3 is in the engaged state.

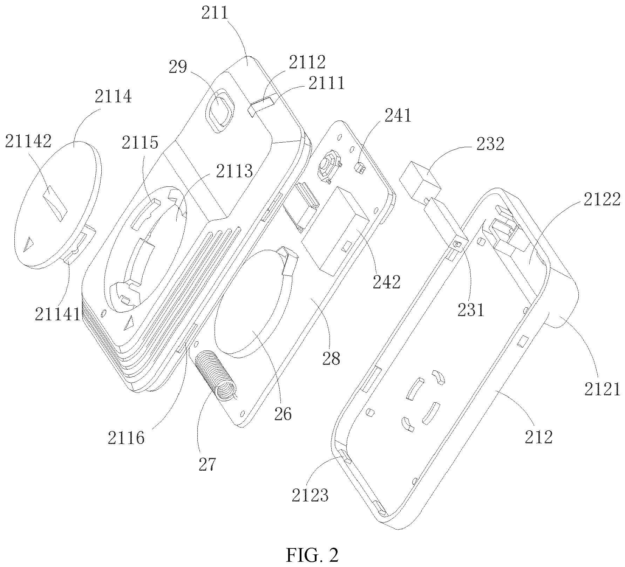

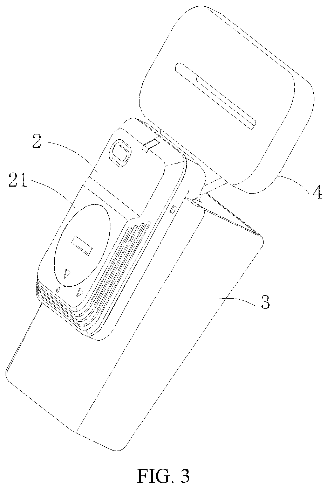

Referring to FIG. 2 and FIG. 3, in the present embodiment, the enclosure 21 includes a cover 211 and a bottom case 212. The detection host 2 further includes a circuit board 28 disposed within the enclosure 21. The cover 211 and the bottom case 212 are detachably covered with each other. Specifically, an inner side wall of the bottom case 212 is provided with a plurality of elastic engaging blocks 2123. An outer side wall of the cover 211 is provided with a plurality of engaging grooves 2116 for inserting and fixing the elastic engaging blocks 2123. The cooperation of the elastic engaging blocks 2123 and the engaging grooves 2116 is more convenient and quicker in disassembly and assembly. In other embodiments, the cover 211 and the bottom case 212 may also be connected by threaded connection.

The cover 211 is provided with a switch button 29 electrically connected to the circuit board 28. The switch button 29 can be used to control the wake or sleep of the detection host 2. It should be noted that the connection between the tongue 4 of the seat belt and the buckle 3, and pressing of the switch button 29 can both wake up the detection host 2. Further, the switch button 29 is also set to enable mute control of the buzzer 242 when it is long pressed. Preferably, after the switch button 29 is pressed for 3 seconds, the mute control of the buzzer 242 can be realized. Further, the button switch is further configured to achieve a match between the detection host 2 and the pressure sensing device 1 when it is pressed a plurality of times. Preferably, the switch button 29 is pressed five times in succession such that the detection host 2 enters a matching state to receive a signal from the pressure sensing device 1 to achieve matching.

In this embodiment, the second antenna 27, the second button battery 26, the indicator light 241, the buzzer 242, the reed switch 231, and the magnet 232 are connected to the circuit board 28. Specifically, the reed switch 231 and the magnet 232 are connected onto the circuit board 28 at a side facing the bottom case 212. The second antenna 27, the second button battery 26, the indicator light 241, and the buzzer 242 are mounted on the circuit board 28 at another side that is away from the magnet 232. By disposing the reed switch 231 and the magnet 232 on the side close to the bottom case 212, it is advantageous to reduce the horizontal distance between the reed switch 231 and the magnet 232 and the tongue 4 of the seat belt, thereby improving the detection accuracy.

Further, a limiting portion 2121 is protruded and defined on a top of the bottom case 212 at a side away from the cover 211. The limiting portion 2121 can be clipped on a top end surface of the buckle 3 of the seat belt. A receiving groove 2122 for accommodating the reed switch 231 and the magnet 232 is defined in the bottom case 212 at a side adjacent to the cover 211 and close to the limiting portion 2121. The reed switch 231 and the magnet 232 are mounted into the receiving groove 2122 with a gap therebetween. In this embodiment, the side of the bottom case 212 away from the cover 211 is adhesively fixed to an outer wall of the buckle 3 of the safety belt.

The limiting portion 2121 is disposed on the outer side of the bottom case 212. When the detection host 2 is mounted on the buckle 3 of the safety belt, the limiting portion 2121 can be clipped on a top of the buckle 3 of the safety belt, thereby improving the connection stability, preventing the detection host 2 from falling off. In addition, the receiving groove 2122 is used to receive the reed switch 231 and the magnet 232, which reduces the size of the detection host 2, and reduces the distance between the reed switch 231 and the magnet 232 and the buckle 3 of the seat belt, thereby improving the detection sensitivity.

In the embodiment, the cover 211 is provided with a light-transmitting hole 2111 for allowing light of an illuminating member to pass through. A light-transmitting plate 2112 is mounted at the light-transmitting hole 2111. In other embodiments, the cover 211 can be made of a light transmitting material. In this embodiment, the second antenna 27 has a multi-turn coil.

In this embodiment, the cover 211 is provided with a replacement opening 2113 at a position corresponding to the battery for replacing the battery. A casing 2114 detachably connected to the cover 211 is disposed at the replacement opening 2113. An inner wall of the replacement opening 2113 is provided with a stop block 2115. The casing 2114 is provided with a locking block 21141 that can be inserted into the replacement opening 2113 and locked with the blocking block 2115 after being rotated.

Preferably, a limiting protrusion protrudes from the blocking block 2115. The locking block 21141 is provided with a limiting groove for the limiting protrusion to be inserted. By the cooperation of the limiting protrusion and the limiting groove, the relative location of the stop block 2115 and the locking block 21141 is fixed, so that the relative movement of the two is less likely to occur, and the connection strength between the casing 2114 and the cover 211 is improved.

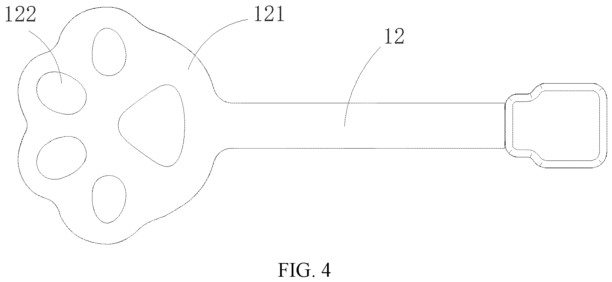

Referring to FIG. 4, in current embodiment, the pressure sensing module 12 includes a bottom plate 121 and a plurality of sensors 122 disposed on the bottom plate 121 in a predetermined pattern. The plurality of sensors 122 increases the sensing area, allowing the child to sit evenly on the sensors 122.

Preferably, a side of the casing 2114 away from the bottom case 212 is provided with an operation slot 21142 which is a straight operation slot. The operator can use a tool to rotate the cover 2114 with the help of the operation slot 21142, thereby making the operation more labor-saving and convenient.

The present invention also provides a in-vehicle safety alert method using the above-mentioned in-vehicle safety alert system, comprising the following steps:
a pressure sensing module 12 sending a pressure contact signal or a pressure release signal to a second control module 22 through a first control module 11 when the pressure sensing module 12 is pressed or released;
when a buckle sensing module 23 sensing that a tongue 4 of a seat belt is disengaged from a buckle 3, the buckle sensing module 23 sending a disengagement signal to the second control module 22; and
the second control module 22 sending a control command to an indicator module 24 to prompt the indicator module 24 issuing a first indication signal, if the second control module 22 receives a disengagement signal and does not receive the pressure release signal within the preset time.

Further, the pressure sensing device 1 includes a first wireless communication module, and when the first control module receives a pressure contact signal or a pressure release signal, the first control module correspondingly enters a wake state or a sleep state, and drives the first wireless communication module to enter a working state or a shutdown state.

Further, the first control module 11 includes a first control unit and a first timing unit, and when the first control unit receives the pressure contact signal or the pressure release signal, the first control unit sends a corresponding wake-up command or a sleep command to the first timing unit. The first control module periodically enters a wake state according to a preset time of the first timing unit, and drives the first wireless communication module to enter a working state.

Further, the detection host 2 includes a second wireless communication module. When the second control module 22 receives the engagement signal or the disengagement signal, the second control module enters a wake state or a sleep state, and drives the second wireless communication module and the indicator module 24 to enter a working state or a shutdown state.

Further, the second control module 22 includes a second control unit and a second timing unit, and when the second control unit receives the engagement signal or the disengagement signal, the second control unit sends a wakeup or sleep command to the second timing unit. The second control module 22 periodically enters a wake state according to a preset time of the second timing unit, and drives the second wireless communication module and the indicator module 24 to enter a working state.

Further, the detection host 2 includes a pairing control module, and when the pairing control module sends a pairing request signal to the second control module 22, the second control module 22 enters a wake state after receiving the pairing request signal, and drives the second wireless communication module to enter a working state. The pressure sensing module sends a pressure contact signal through the first wireless communication module after being pressed. After receiving the pressure contact signal by the second wireless communication module, the second control module 22 matches and stores the pressure contact signal to achieve signal matching between the pressure sensing device 1 and the detection host 2.

Further, when the pressure sensing module 12 is pressed or released, it sends a corresponding pressure contact signal or pressure release signal to the second control module 22 through the first control module 11. After the second control module 22 responds to the pressure contact signal or the pressure release signal, it prompts indicator module 24 to issue a fourth or fifth indication signal.

Further, the detection host 2 includes a sound generator and a mute control module 25. The mute control module 25 sends the mute request signal or the sound generating request signal to the second control module 22, the second control module 22 sends a corresponding control command to the sound generator in response to the mute request signal or the sound generating request signal, thereby prompting the sound generator to enter a mute state or a sound generating state.

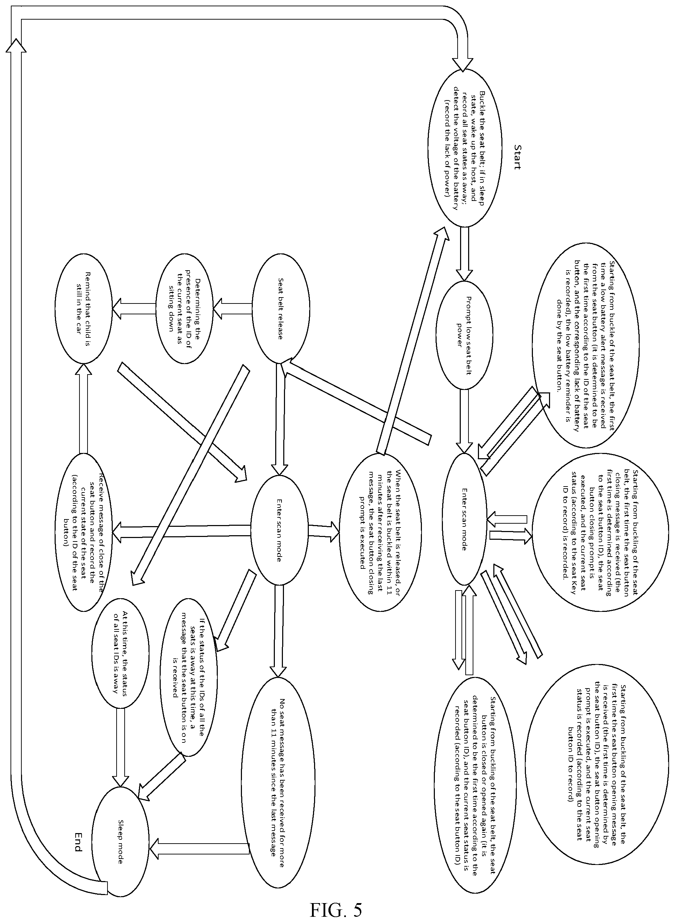

Referring to FIG. 5, the application flow diagram of the detection host 2 and the pressure sensing device 1 is as follows. In this application flow, the pressure sensing device 1 is mounted on the seat, and the seat button mounted on the seat receives the sensing data. It should be noted that one detection host 2 can be matched with a plurality of pressure sensing devices 1. When the seat belt is buckled, the detection host 2 is woken up, and after the power is detected, the scanning mode is entered. At this time, the detection host 2 can receive the pressure contact signal and the pressure release signal sent by the pressure sensing device 1, which respectively correspond to the closing and opening of the seat button. When the seat belt is released, the detection host 2 enters the scanning mode and receives signals transmitted by the pressure sensing device 1 on all the seats. If the detection host 2 does not receive the signal of opening from the seat button, the current seat state is recorded as sitting down, or if the detection host 2 receives the signal of closing from the seat button, alert is generated that the child stays in the vehicle in both situations. If the host 2 does not receive the signal sent by the seat within 11 minutes after the seat belt is released, it will automatically enter the sleep state. If the detection host 2 receives the signal of opening from all the seat buttons within 11 minutes after the seat belt is released, it automatically enters the sleep state. Alternatively, if the seat belt is detected to be in an open state when the seat belt is released, that is, when the seat state is in the leaving state, the detection host 2 automatically enters sleep state.

## Claims

1. A vehicle safety prompt system, comprising a pressure sensing device and a detection host, wherein
the pressure sensing device adapts to be mounted at a seat cushion site and comprises a first control module and a pressure sensing module, and the pressure sensing module is used for sensing a pressure state of a seat cushion and sending a contact pressure signal and a pressure release signal correspondingly characterizing contact pressure and pressure release to the first control module;
the detection host adapts to be mounted to a safety belt female buckle of a driver seat and comprises a shell, a second control module, a buckling sensing module, an indication module and a power module supplying electricity to the detection host, and the second control module, the buckling sensing module, the indication module and the power module are received in the shell; the buckling sensing module is used for sensing a buckling state that a safety belt buckle is connected with the female buckle and sending a buckling signal or a tripping signal correspondingly characterizing buckling or separating between the safety belt buckle and the female buckle to the second control module; and the second control module is in communication connection with the first control module and is used for driving the indication module to send a first indicator signal when receiving the tripping signal without receiving the pressure release signal in a preset time interval.

2. The vehicle safety prompt system according to claim 1, wherein the pressure sensing device comprises a first wireless communication module electrically connected with the first control module; the detection host comprises a second wireless communication module which is received in the shell and electrically connected with the second control module; and communication between the first control module and the second control module is achieved through a wireless communication module connected therebetween.

3. The vehicle safety prompt system according to claim 2, wherein the first control module is used for correspondingly entering an awake state or a sleep state when receiving the contact pressure signal or the pressure release signal, so as to drive the first wireless communication module to enter a working state or a down state; and the first control module comprises a first delay unit for enabling the first control module to delay in entering the sleep state when receiving the pressure release signal.

4. The vehicle safety prompt system according to claim 3, wherein the first control module comprises a first control unit and a first timing unit which are electrically with each other; the first timing unit is used for correspondingly entering the awake state or the sleep state when the pressure sensing module is subjected to contact pressure or pressure release; and the first control module is used for periodically entering the awake state according to a preset time interval of the first timing unit, so as to drive the first wireless communication module to enter the working state.

5. The vehicle safety prompt system according to claim 2, wherein the second control module is used for correspondingly entering the awake state or the sleep state when receiving the buckling signal or the tripping signal, so as to drive the second wireless communication module and the indication module to enter the working state or the down state; and the second control module further comprises a second delay unit for enabling the second control module to delay in entering the sleep state when the safety belt buckle is separated from the female buckle.

6. The vehicle safety prompt system according to claim 5, wherein the second control module comprises a second control unit and a second timing unit which are electrically with each other; the second timing unit is used for correspondingly entering the awake state or the sleep state when the safety belt buckle is buckled with or separated from the female buckle; and the second control module is used for periodically entering the awake state according to a preset time interval of the second timing unit, so as to drive the second wireless communication module and the indication module to enter the working state.

7. The vehicle safety prompt system according to claim 2, wherein the detection host comprises a matching control module; the matching control module is electrically connected with the second control module and is used for sending a matching request signal to second control module; and the second control module is used for responding to the matching request signal and processing, matching and storing a communication signal received by the second wireless communication module.

8. The vehicle safety prompt system according to claim 1, wherein the first control module comprises the first control unit and a first electronic quantity detection unit; the first electronic quantity detection unit is used for detecting electronic quantity information of the pressure sensing device; the first control unit is used for sending the electronic quantity information detected by first electronic quantity detection unit to the second control module; and the second control module is used for driving the indication module to send a second indicator signal when the electronic quantity of the pressure sensing device is lower than a preset value.

9. The vehicle safety prompt system according to claim 1, wherein the second control module comprises the second control unit and a second electronic quantity detection unit; the second electronic quantity detection unit is used for detecting electronic quantity information of the detection host and sending the electronic quantity information to the second electronic quantity detection unit; and the second control module is used for driving the indication module to send a third indicator signal when the electronic quantity of the detection host is lower than a preset value.

10. The vehicle safety prompt system according to claim 1, wherein the second control module is used for responding to the contact pressure signal and driving the indication module to send a fourth indicator signal; and the second control module is further used for responding to the pressure release signal and driving the indicator module to send a fifth indicator signal.

11. The vehicle safety prompt system according to claim 1, wherein the indication module comprises a sounder; the detection host comprises a mute control module; the mute control module is electrically connected with the second control module and is used for sending a mute request signal or a sounding request signal to the second control module; and the second control module is used for responding to the mute request signal or the sounding request signal and sending a control instruction to drive the sounder to enter a mute state or a sounding state.

12. The vehicle safety prompt system according to claim 1, wherein the pressure sensing module comprises a bottom plate and a plurality of sensing contacts which are arranged on the bottom plate and in a preset pattern.

13. The vehicle safety prompt system according to claim 1, wherein the buckling sensing module comprises a reed switch and a magnet; and the magnet is used for magnetizing the safety belt buckle when the safety belt buckle is inserted into the female buckle, so that the reed switch is closed.

14. The vehicle safety prompt system according to claim 1, wherein the buckling sensing module comprises an infrared sensing module, a Hall switch or a capacitive approach switch.

15. The vehicle safety prompt system according to claim 1, wherein the shell is internally provided with a circuit board; and the second control module, the buckling sensing module, the indication module and the power module are all electrically connected with the circuit board.

16. The vehicle safety prompt system according to claim 15, wherein the shell comprises a face cover and a bottom cover which are mutually covered, and the bottom cover adapts to be connected with the safety belt female buckle to mount the detection host on the safety belt female buckle; and the buckling sensing module comprises the reed switch and the magnet, and the reed switch and the magnet are connected to one side, facing the bottom shell, of the circuit board.

17. The vehicle safety prompt system according to claim 16, wherein the top end of one side, away from the face cover, of the bottom shell protrudes to form a limiting portion; and the limiting portion may be hooked on the top end surface of the safety belt female buckle when the detection host is mounted on the safety belt female buckle.

18. The vehicle safety prompt system according to claim 17, wherein a position, opposite to the limiting portion, on one side, close to the face cover, of the bottom shell is sunken to form an accommodating groove, in which the reed switch and the magnet are accommodated.

19. The vehicle safety prompt system according to claim 15, wherein the power module comprises a battery; a changing hole, through which the battery is changed, is formed in the face cover corresponding to the battery; and the changing hole is provided with a shielding cover detachably connected with the face cover.

20. The vehicle safety prompt system according to claim 19, wherein a stop block is arranged on the inner wall of the changing hole; and the shielding cover is provided with a locking block which may be inserted into the changing hole and is in clamping connection with the stop block after rotating.

21. A vehicle safety prompt method implemented by the vehicle safety prompt system according to any one of claims 1-20, comprising the following steps:
when the pressure sensing module is subjected to contact pressure or pressure release, sending, by the pressure sensing module, the corresponding contact pressure signal or pressure release signal to the second control module through the first control module;
when the buckling sensing module senses the safety belt buckle to be separated from the female buckle, sending, by the buckling sensing module, the tripping signal to the second control module; and
if the second control module receives the tripping signal without receiving the pressure release signal within the preset time interval, sending, by the second control module, the control instruction to the indication module to drive the indication module to send the first indicator signal.

22. The vehicle safety prompt method according to claim 21, wherein
when the pressure sensing device comprises the first wireless communication module, and the first control module receives the contact pressure signal or the pressure release signal, the first control module correspondingly enters the awake state or the sleep state, so as to drive the first wireless communication module to correspondingly enter the working state or the down state.

23. The vehicle safety prompt method according to claim 22, wherein
when the first control module comprises the first control unit and the first timing unit, and the first control unit receives the contact pressure signal or the pressure release signal, the first control unit sends a corresponding awakening instruction or sleep instruction to the first timing unit, and the first control module periodically enters the awake state according to the preset time interval of the first timing unit, so as to correspondingly drive the first wireless communication module to enter the working state.

24. The vehicle safety prompt method according to claim 21, wherein
when the detection host comprises the second wireless communication module, and the second control module receives the buckling signal or the tripping signal, the second control module correspondingly enters the awake state or the sleep state, so as to drive the second wireless communication module and the indication module to enter the working state or the down state.

25. The vehicle safety prompt method according to claim 24, wherein
when the second control module comprises the second control unit and the second timing unit, and the second control unit receives the buckling signal or the tripping signal, the second control unit sends the corresponding awakening instruction or sleep instruction to the second timing unit, and the second control module periodically enters the awake state according to the preset time interval of the second timing unit, so as to drive the second wireless communication module and the indication module to enter the working state.

26. The vehicle safety prompt method according to claim 24, wherein
when the detection host comprises the matching control module, and the matching control module sends the matching request signal to the second control module, the second control module enters the awake state after receiving the matching request signal and drives the second wireless communication module to enter the working state; the pressure sensing module sends the contact pressure signal through the first wireless communication module after being subjected contact pressure; and the second control module conducts matching processing and storage after receiving the contact pressure signal through the second wireless communication module, so as to achieve signal matching between the pressure sensing device and the detection host.

27. The vehicle safety prompt method according to claim 21, wherein
when being subjected to contact pressure or pressure release, the pressure sensing module sends the corresponding contact pressure signal or pressure release signal to the second control module through the first control module; and the second control module drives the indication module to send the corresponding fourth indicator signal or fifth indicator signal after being in response to the contact pressure signal or the pressure release signal.

28. The vehicle safety prompt method according to claim 21, wherein
when the detection host comprises the sounder and the mute control module, and the mute control module sends the mute request signal or the sounding request signal to the second control module, the second control module sends the corresponding control instruction to the sounder in response to the mute request signal or the sounding request signal, so as to drive the sounder to correspondingly enter the mute state or the sounding state.
